# EUROPEAN PATENT APPLICATION

(11) **EP 3 361 350 A1**
(43) Date of publication of application: **15.08.2018**
(21) Application number: 16853328.9
(22) Date of filing: 12.08.2016
(51) Int. Cl.: G06F 3/01

(54) **HAPTIC REPRODUCTION DEVICE**

(30) Priority: 05.10.2015 JP 2015198068
(71) Applicant: Alps Electric Co., Ltd., Tokyo 145-8501 (JP)
(72) Inventor: HAGIWARA, Yasuji, Tokyo 145-8501 (JP); TAKAI, Daisuke, Tokyo 145-8501 (JP)
(74) Representative: Schmitt-Nilson Schraud Waibel Wohlfrom Patentanwälte Partnerschaft mbB
(86) International application number: PCT/JP2016/073764
(87) International publication number: WO 2017/061173

(57) **Abstract**

To provide a tactile sensation reproduction apparatus capable of giving a reaction force to a finger that stimulates an operation of gripping a virtual held object by a finger. An input device 20 is included. A first opposing operation body 33A, a second opposing operation body 33B and a thumb operation body 43 are protruded from a case 21 of the input device 20. By holding the thumb operation body 43 by a thumb and holding the opposing operation bodies 33A and 33B by an index finger and a middle finger, respectively, an operation same as gripping a held object is performed. A control signal is provided from a control unit to motors in the case 21, and reaction forces are given to fingers from the opposing operation bodies 33A and 33B and the thumb operation body 43. Further, when one of the opposing operation bodies is retracted, following this, the other of the operation bodies is retracted.

## Description

### BACKGROUND OF THE INVENTION

### 1. Field of the Invention

The present invention relates to a tactile sensation reproduction apparatus capable of feeling, when gripping an operation body provided in an input device by a finger, a reaction force that simulates holding of a virtual held object by the finger.

### 2. Description of the Related Art

Patent Document 1 describes an invention regarding a virtual space display device.

The virtual space display device is configured to communicate between a terminal communication unit and a server, and a touch panel including a liquid crystal display and an input unit is provided at the terminal communication unit.

An image of a shopping mall is displayed on the liquid crystal display of the touch panel by communication from the server. When a user drags the touch panel, a scene in the displayed shopping mall can be moved, and when the user taps a product (merchandise) thumbnail in the image of the shopping mall, detailed information of the product is displayed in a screen. The user can temporarily collect products planning to buy at a stock area, and can by the products by a payment process on the stocked products. Patent Document 1: Japanese Laid-open Patent Publication No. 2012-234355

According to the virtual space display device described in Patent Document 1, the user can confirm prices and colors of products that are displayed in a store of the shopping mall, and can search a product to buy by referring to detailed information of the product.

However, as it is impossible to actually touch the product by a hand, the user cannot feel a size or texture of the product by the hand. Further, when a product is a tool that cuts a workpiece or that bends a workpiece by an operation of a hand, it is impossible to feel at what feeling the operation is performed by the hand.

### SUMMARY OF THE INVENTION

The present invention is made in light of the above problems, and provides a tactile sensation reproduction apparatus capable of reproducing an operation feeling near an actual state when operating a held object that mechanically acts such as a tool by a hand.

A tactile sensation reproduction apparatus, includes an input device; and a control unit, wherein the input device includes a plurality of operation bodies that protrude in an opposite direction from the case, a position detection device that detects a protruded position of each of the operation bodies from the case, and a motor that provides a force to each of the operation bodies, wherein when it is detected that the operation body is moved by being pushed toward the case based on the detection signal from the position detection device, the control unit drives the motor to give a reaction force to the moved operation body, and wherein when it is detected that one of the operation bodies is moved toward the case earlier based on the detection signal from the position detection device, the control unit drives the motor such that the other of the operation bodies is also moved toward the case.

According to the tactile sensation reproduction apparatus of the invention, when it is determined that one of the operation bodies is moved toward the case earlier for greater than or equal to a predetermined distance with respect to that of the other of the operation bodies, the other of the operation bodies may be controlled to follow the preceding operation body to be moved toward the case.

According to the tactile sensation reproduction apparatus of the invention, when one of the operation bodies that is moved toward the case is moved in a direction protruding from the case, in accordance with this, the other of the operation bodies may be returned to a position protruding from the case by power of the motor.

The tactile sensation reproduction apparatus of the invention may be configured such that a thumb operation body that is pushed and operated by a thumb, and a first opposing operation body and a second opposing operation body that are individually pushed and operated by an index finger and a middle finger, are provided in the input device, and the first opposing operation body and the second opposing operation body protrude in a direction opposite to a protruding direction of the thumb operation body.

The tactile sensation reproduction apparatus of the invention may further include a display device, and it is preferable that the control unit displays an image of a virtual held object and an image of a hand in a display screen of the display device, and when the operation bodies of the input device are held by a finger, an image in which the image of the hand holds the image of the held object is displayed.

According to the tactile sensation reproduction apparatus of the invention, the virtual held object includes a pair of holding portions including a common fulcrum to rotate, an image in which one of the holding portions is held by the thumb and the other of the holding portions is held by the index finger and the middle finger is displayed, and when the thumb operation body is pushed by the thumb or the first opposing operation body or the second opposing operation body is pushed by the index finger or the middle finger, the image is changed such that the pair of holding portions are approaching each other in the displayed image.

For example, the held object is a cut-off tool that is operated by being sandwiched by a thumb, an index finger and a middle finger.

Alternatively, the held object is cutting pliers that are operated by being sandwiched by a thumb, an index finger and a middle finger.

Alternatively, the held object is a stapler that is operated by being sandwiched by a thumb, an index finger and a middle finger.

According to the tactile sensation reproduction apparatus of the invention, when one of a plurality of operation bodies protruding from an input device is pushed earlier than the other of the operation bodies, following this, the other of the operation bodies is retracted toward a case. By adopting this structure, a holding feeling same as operating various products by a hand such as a tool in which holding portions are symmetrically acting in conjunction with each other can be reproduced.

### BRIEF DESCRIPTION OF THE DRAWINGS

Fig. 1A is a view for describing an example of using a tactile sensation reproduction apparatus of a first embodiment of the invention;
Fig. 1B is a view for describing an example of using a tactile sensation reproduction apparatus of a second embodiment of the invention;
Fig. 2 is a view illustrating an input device provided at the tactile sensation reproduction apparatus illustrated in Fig. Fig. 1, where (A) is a perspective view seen from an upper side, and (B) is a perspective view seen from a lower side;
Fig. 3 is an exploded perspective view of the input device illustrated in Fig. 2;
Fig. 4 is a perspective view illustrating a tactile sensation generation unit provided at the input device illustrated in Fig. 2;
Fig. 5 is a block diagram illustrating a structure of the tactile sensation reproduction apparatus of an embodiment of the invention;
Fig. 6 illustrates a usage example of the tactile sensation reproduction apparatus of the embodiment, and is a view for describing a displayed image when operating a cut-off tool as a virtual held object;
Fig. 7(A) is a view for describing an operation of each operation body when gripping the cut-off tool as the virtual held object, and Fig. 7(B) is a view for describing another example of the operation of each operation body when operating the cut-off tool as the virtual held object;
Fig. 8A is a view for describing a reaction force that acts on a thumb operation body when operating the cut-off tool as the virtual held object;
Fig. 8B is a view for describing a reaction force that acts on a first opposing operation body when operating the cut-off tool as the virtual held object; and
Fig. 8C is a view for describing a reaction force that acts on a second opposing operation body when operating the cut-off tool as the virtual held object.

### DETAILED DESCRIPTION OF THE PREFERRED EMBODIMENTS

### (Entire structure)

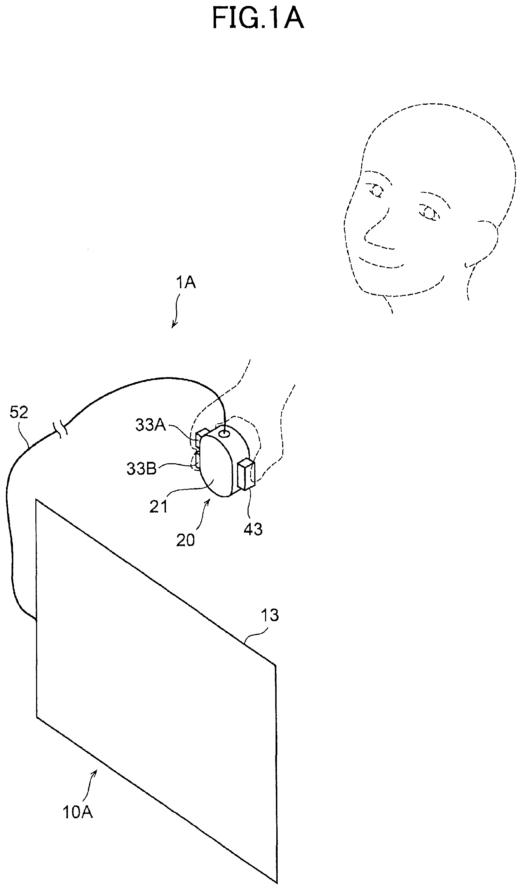

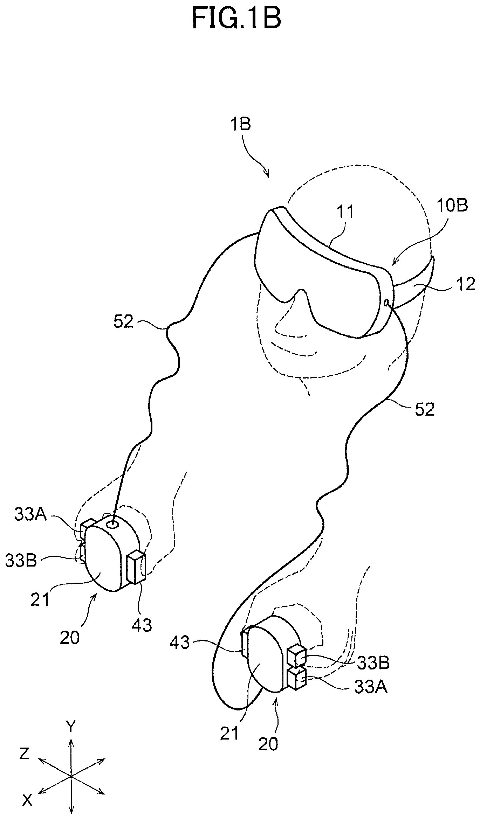

Fig. 1A and Fig. 1B illustrate a state in which tactile sensation reproduction apparatuses (haptic reproduction devices) 1A and 1B of the invention are respectively used.

The tactile sensation reproduction apparatus 1A of the first embodiment illustrated in Fig. 1A is constituted by a device body 10A and an input device 20. In Fig. 1A, a single input device 20 is used, and the input device 20 is operated by a right hand.

The input device 20 is connected to the device body 10A by an electric cord 52. A display device 13 is provided at the device body 10A. The display device 13 is a color liquid crystal display panel, an electroluminescent display panel and the like. The device body 10A is a personal computer, a display device for demonstration having a relatively large display screen, and the like.

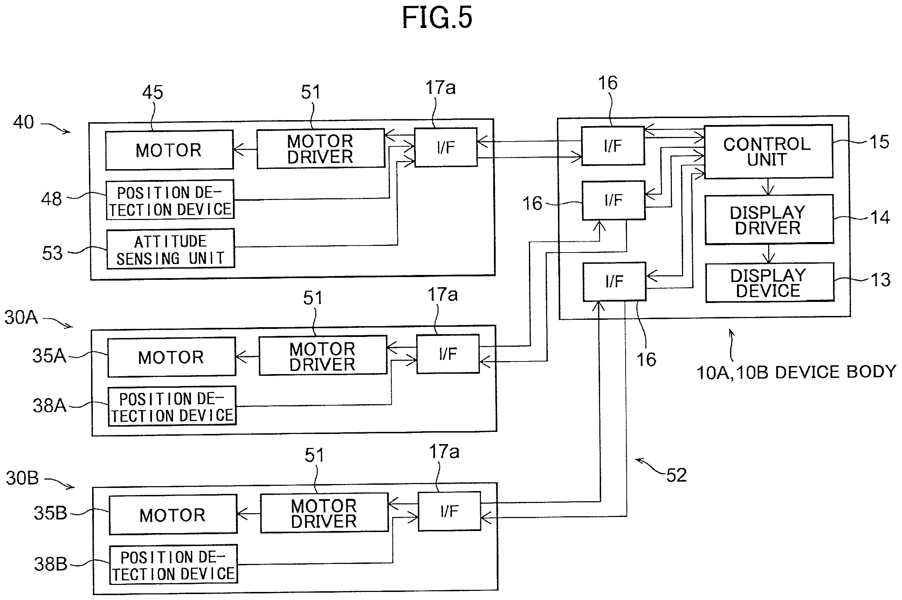

As illustrated in Fig. 5, a display driver 14 for driving the display device 13 and a control unit 15 for controlling a display form of the display driver 14 are provided in the device body 10A. The control unit 15 is mainly constituted by a CPU and a memory. Further, interfaces 16 for transmitting signals between the control unit 15 and the input device 20 are provided.

The tactile sensation reproduction apparatus 1B of the second embodiment illustrated in Fig. 1B is constituted by a device body 10B and an input device 20. In Fig. 1B, two same input devices 20 are used, and the input devices 20 are operated by a right hand and a left hand, respectively.

The device body 10B includes a mask-shaped main body 11 mounted in front of eyes, and a strap 12 for mounting the mask-shaped main body 11 on a head.

The display device 13 is provided at the mask-shaped main body 11 of the device body 10B. The display device 13 is provided in front of eyes of an operator and is configured to be viewable. The display driver 14, the control unit 15, the interfaces 16 and the like illustrated in Fig. 5 are mounted on the mask-shaped main body 11.

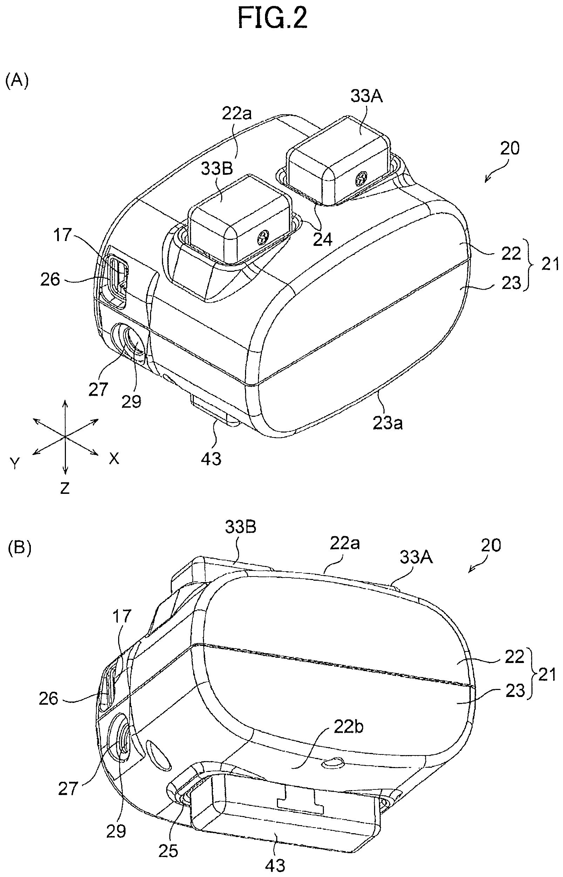

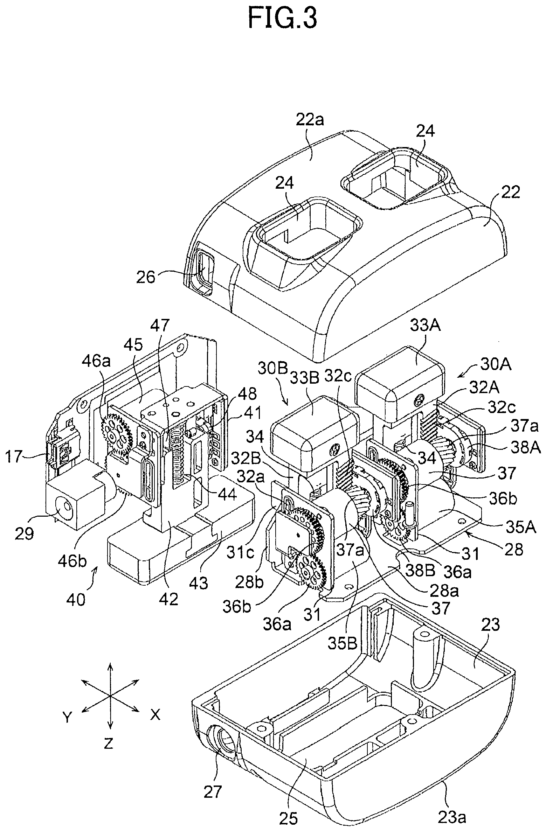

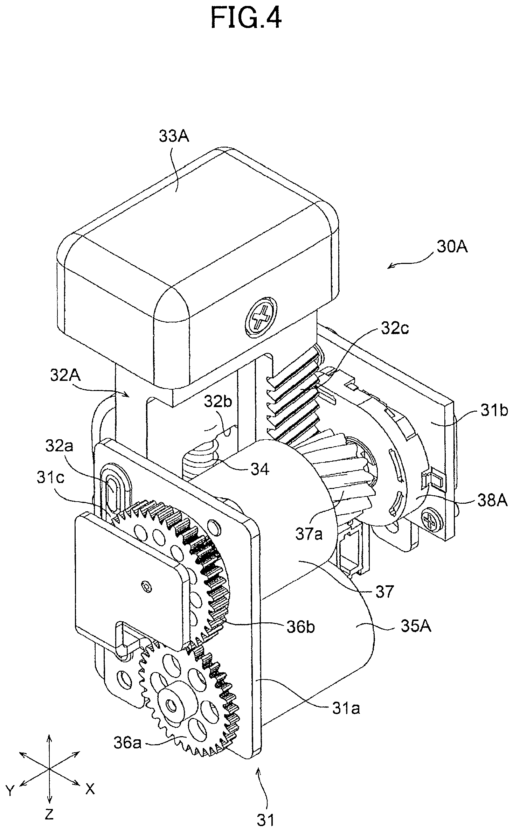

Fig. 2(A) illustrates a perspective view of an appearance of the input device 20 seen from an upper side, and Fig. 2(B) illustrates a perspective view of an appearance of the input device 20 seen from a lower side. Fig. 3 is an exploded perspective view of the input device 20. Fig. 4 illustrates a structure of a first tactile sensation generation unit 30A, among three tactile sensation generation units included in the input device 20. An X-Y-Z coordinate that is on the basis of the input device 20 is illustrated in each of Fig. 2(A), Fig. 3 and Fig. 4. For the input device 20, a Z direction is a pushing direction of each operation body.

In a usage example illustrated in Fig. 1A and Fig. 1B, the input device 20 is held at an attitude in which the Y direction is extending up and down by hand(s) of a human.

As illustrated in Fig. 2, the input device 20 includes a case 21 made of synthetic resin. The case 21 has a size capable of being held by a single hand. The case 21 is configured by a combination of an upper case 22 and a lower case 23. As illustrated in Fig. 3, the upper case 22 and the lower case 23 are capable of being separated in the Z direction. The upper case 22 and the lower case 23 are fixed with each other by screw means or the like, and a space for housing a mechanism is formed in the two cases 22 and 23.

A surface of the upper case 22 that faces in the Z direction is a first surface 22a, and a surface of the lower case 23 that faces in the Z direction is a second surface 23a. As illustrated in Fig. 3, operation holes 24 and 24 each penetrating the first surface 22a in the Z direction are formed at the upper case 22. An operation hole 25 penetrating the second surface 23a in the Z direction is formed at the lower case 23. The operation holes 24 and 24 are aligned in the Y direction, and the open size of the operation hole 25 in the Y direction is larger than that of each of the operation holes 24.

A connector insertion hole 26 is opened at an end surface of the upper case 22 that faces in the Y direction, and a power supply plug insertion hole 27 is opened at an end surface of the lower case 23 that faces in the Y direction.

As illustrated in Fig. 3, a mechanism chassis 28 is housed in the space for housing the mechanism in the case 21. The mechanism chassis 28 is formed by bending a metal plate, and an attachment plate portion 28a that is parallel to an X-Y plane, and a partition plate portion 28b that is parallel to a Y-Z plane are formed.

The first tactile sensation generation unit 30A and a second tactile sensation generation unit 30B are fixed at one side of the partition plate portion 28b in an X direction. The first tactile sensation generation unit 30A and the second tactile sensation generation unit 30B are aligned in a Y direction. A single third tactile sensation generation unit 40 is placed at the other side of the partition plate portion 28b in the X direction.

### (Structure of tactile sensation generation unit)

Fig. 4 illustrates a structure of the first tactile sensation generation unit 30A.

The first tactile sensation generation unit 30A includes a frame 31 that is formed by bending a metal plate 30. The first tactile sensation generation unit 30A is mounted on the mechanism chassis 28 by fixing the frame 31 to the partition plate portion 28b.

A movable member 32A is provided at the frame 31. The movable member 32A is formed by a synthetic resin material, and a first opposing operation body 33A is fixed at a front portion of the movable member 32A. The first opposing operation body 33A is formed by a synthetic resin material. As illustrated in Fig. 2, the first opposing operation body 33A protrudes outside from the operation hole 24 formed at the upper case 22.

As illustrated in Fig. 1A and Fig. 1B, when the input device 20 is held by a right hand, the first opposing operation body 33A is pushed by an index finger, and as illustrated in Fig. 1B, when the input device 20 is held by a left hand, the first opposing operation body 33A is operated by a middle finger.

As illustrated in Fig. 4, a guide long hole 31c that extends in in the Z direction is formed at a side plate portion 31a of the frame 31. A slidable protruding portion 32a is integrally formed at a side portion of the movable member 32A, and the movable member 32A is movably supported on the frame 31 in the Z direction by sliding the slidable protruding portion 32a in the guide long hole 31c. The movable member 32A includes a concave portion 32b. A compression coil spring 34 is interposed between the movable member 32A and a lower end portion of the frame 31, inside the concave portion 32b. The movable member 32A is pushed upward in the Z direction, in which the first opposing operation body 33A protrudes from the upper case 22, by an elastic force of the compression coil spring 34.

A motor 35A is fixed to the sidewall portion 31a of the frame 31. An output gear 36a is fixed to an output shaft of the motor 35A. A reduction gear 36b is rotatably supported at an outer surface of the sidewall portion 31a, and the output gear 36a and the reduction gear 36b are engaging with each other. A gear box 37 is fixed to the sidewall portion 31a of the frame 31, and a reduction mechanism is housed in the gear box 37. A rotary force of the reduction gear 36b is reduced by the reduction mechanism in the gear box 37. The reduction mechanism in the gear box 37 is configured by a sun gear, a planet gear and the like.

A pinion (PIN pin) 37a is fixed to a reduction output shaft of the gear box 37. A rack portion 32c is formed at a surface of a thick portion of the movable member 32A, and the pinion 37a and the rack portion 32c are engaging with each other. A teeth portion of the pinion 38a and a teeth portion of the rack portion 32c are inclined teeth that are inclined with respect to the Y direction that is oblique to a moving direction of the movable member 32A.

By providing the compression coil spring 34, backlash between the pinion 38a and the rack portion 32c can be eliminated. However, the compression coil spring 34 may not be provided in each of the tactile sensation generation units.

A position detection device 38A is fixed at another sidewall portion 31b of the frame 31. The position detection device 38A includes a stator portion fixed to the sidewall portion 31b and a rotor portion facing the stator portion and rotating. A rotor shaft provided at the rotor portion rotates with the pinion 37a. The position detection device 38A is a resistance variation type, and an arc resistive pattern is provided at the stator portion, and a slider that slides the resistive pattern is provided at the rotor portion. Here, the position detection device 38A may be a magnetic detection type in which a rotation magnet is fixed at the rotor portion, a magnetic detection element such as a GMR element is provided at the stator portion, and a rotation angle of the rotor portion is detected by the magnetic detection element. Alternatively, the position detection device 38A may be an optical position detection device.

As illustrated in Fig. 3, the second tactile sensation generation unit 30B is fixed at the one side in the X direction while interposing the partition plate portion 28b to be aligned with the first tactile sensation generation unit 30A. As a structure of the second tactile sensation generation unit 30B is the same as the structure of the first tactile sensation generation unit 30A, detailed explanation is not repeated.

In the second tactile sensation generation unit 30B, a second opposing operation body 33B is fixed at an upper portion of a movable member 32B in the z side. The second opposing operation body 33B has a same shape and a same size as those of the first opposing operation body 33A.

Further, in the second tactile sensation generation unit 30B, although a motor is indicated by "35B" and a position detection device is indicated by "38B", these are the same as the motor 35A and the position detection device 38A provided in the first tactile sensation generation unit 30A, respectively.

As illustrated in Fig. 1A and Fig. 1B, when the input device 20 is held by a right hand, the second opposing operation body 33B is pushed by a middle finger. As illustrated in Fig. 1B, when the input device 20 is held by a left hand, the second opposing operation body 33B is operated by an index finger.

As illustrated in Fig. 3, the third tactile sensation generation unit 40 is provided at the other side of the partition plate portion 28b of the mechanism chassis 28.

Although the third tactile sensation generation unit 40 has a basic structure same as that of each the first tactile sensation generation unit 30A and the second tactile sensation generation unit 30B, the third tactile sensation generation unit 40 is formed slightly larger. In the third tactile sensation generation unit 40, the movable member 42 is movably supported on a frame 41 in the Z direction, and a thumb operation body 43 is fixed as a front portion of the movable member 42. The thumb operation body 43 protrudes downward in the drawing from the operation hole 25 of the lower case 23. The movable member 42 is pushed by a compression coil spring 44 in a direction in which the thumb operation body 43 protrudes from the operation hole 25. As described above, this compression coil spring 44 may be omitted.

A width of the thumb operation body 43 in the Y direction is formed to be larger than that of each of the first opposing operation body 33A and the second opposing operation body 33B, and both the first opposing operation body 33A and the second opposing operation body 33B are opposing the thumb operation body 43 in the Z direction. As illustrated in Fig. 1A and Fig. 1B, the thumb operation body 43 is operated by a thumb in both cases when the input device 20 is held by a right hand and by a left hand.

In the third tactile sensation generation unit 40 as well, a motor 45 is fixed to the frame 41, and an output gear 46a fixed to an output shaft of the motor 45 engages with a reduction gear 46b. A rotary force of the reduction gear 46b is reduced by a reduction mechanism in a gear box 47, and the reduced output is transmitted from a pinion to a rack portion formed at the movable member 42. Then, the rotation of the pinion is detected by a position detection device 48.

As illustrated in Fig. 3, a signal connector 17 and a power supply plug 29 are included inside the case 21. The signal connector 17 is exposed inside the connector insertion hole 26 formed at the upper case 22, and the power supply plug 29 is exposed inside the power supply plug insertion hole 27 formed at the lower case 23.

As illustrated in the block diagram of Fig. 5, a motor driver 51 is provided in each of the first tactile sensation generation unit 30A, the second tactile sensation generation unit 30B and the third tactile sensation generation unit 40. Each of a motor 35A provided in the first tactile sensation generation unit 30A, a motor 35B provided in the second tactile sensation generation unit 30B, and a motor 45 provided in the third tactile sensation generation unit 40 is driven and rotated by the respective motor driver 51.

Each of the motor drivers 51 is connected to the signal connector 17 via a respective interface 17a.

As illustrated in Fig. 5, an attitude sensing unit 53 is provided in the case 21 of the input device 20. The attitude sensing unit 53 is, for example, a magnetic sensor that detects geomagnetic sensor or a vibrating gyro device, and can detect an attitude of the input device 20 in an operation space or a position of the input device 20 in the operation space. The attitude sensing unit 53 is connected to the signal connector 17 via the interface 17a.

As illustrated in Fig. 5, the interfaces 16 are provided in the device body 10A or 10B, and a signal connector that is connected to each of the interfaces 16 and the signal connector 17 that is connected to each of the interfaces 17a are connected by the electric cord 52. The electric cord 52 includes a power supply line, and the power supply line is connected to the power supply plug 29. Electric power is supplied from the device body 10A or 10B to the respective input device 20 via the power supply line.

The device body 10A or 10B and the respective input device 20 are capable of communicating with each other by an RF signal, and a battery may be included in the input device 20. In such a case, the electric cord 52 connecting the device body 10A or 10B and the input device 20 is unnecessary.

Further, the device body 10A or 10B may have a communication function with a server.

Further, in each of the device body 10A illustrated in Fig. 1A and the device body 10B illustrated in Fig. 1B, a sound production device is provided. The sound production device is a speaker that produces sound in a space, or a receiver that gives sound to ears of an operator.

Next, a method of operating the tactile sensation reproduction apparatus 1 and its operation are described.

### (Operation of input device 20 and setting of reaction force)

As illustrated in Fig. 2, in the input device 20, the first opposing operation body 33A and the second opposing operation body 33B protrude at the first surface 22a, and the single thumb operation body 43 protrudes at the second surface 22b, of the case 21. The two opposing operation bodies 33A and 33B, and the thumb operation body 43 protrude in an opposite direction in the Z direction. As illustrated in Fig. 1A and Fig. 1B, the input device 20 is held by a single hand, the thumb operation body 43 is pushed and operated by a thumb, and the first opposing operation body 33A and the second opposing operation body 33B are pushed and operated by an index finger and a middle finger.

In the input device 20, a control instruction is supplied from the control unit 15 to each of the motor drivers 51, and the motor 35A of the first tactile sensation generation unit 30A, the motor 35B of the second tactile sensation generation unit 30B and the motor 45 of the third tactile sensation generation unit 40 are operated based on the control instruction.

By controlling rotations of the motors 35A and 35B and the motor 45, the movable members 32A and 32B and the movable member 42 can be moved to desired positions and stopped at the positions, respectively. For example, it is possible to stop the first opposing operation body 33A, the second opposing operation body 33B and the thumb operation body 43 at positions that are protruded from the case 21 at the maximum, or to stop the operation bodies 33A, 33B and 43 at positions that are backslid in the case 21 at the maximum. Further, it is possible to stop the operation bodies 33A and 33B and the operation body 43 at desired positions between the maximum protruded positions and the maximum backslid positions, respectively.

Then, by controlling electric power supplied to each of the motors 35A and 35B and the motor 45, rotors of the motors 35A, 35B and 45 can be retained by strong forces so that the operation bodies 33A, 33B and 40 protruded from the case 21 are not moved.

Under a state in which each of the movable members 32A, 32B and 42 is movable, when one of the first opposing operation body 33A, the second opposing operation body 33B and the thumb operation body 43 is pushed, and the respective movable member 32A, 32B or 42 is moved in a pushdown direction, a moved position is detected by the respective position detection device 38A or 38B, or the position detection device 48 and a detection output is supplied to the control unit 15. The control unit 15 stores data regarding a line of action of a reaction force (coefficient of action of a reaction force) that indicates a relationship between a moved distance and a reaction force, and the motor 35A or 35B, or the motor 45 generates a torque in accordance with the pushed down position of the operation body 33A, 33B or 43 corresponding to the line of action of a reaction force. With this, a reaction force is given to an index finger and a middle finger pushing the opposing operation bodies 33A and 33B, and a thumb pushing the thumb operation body 43.

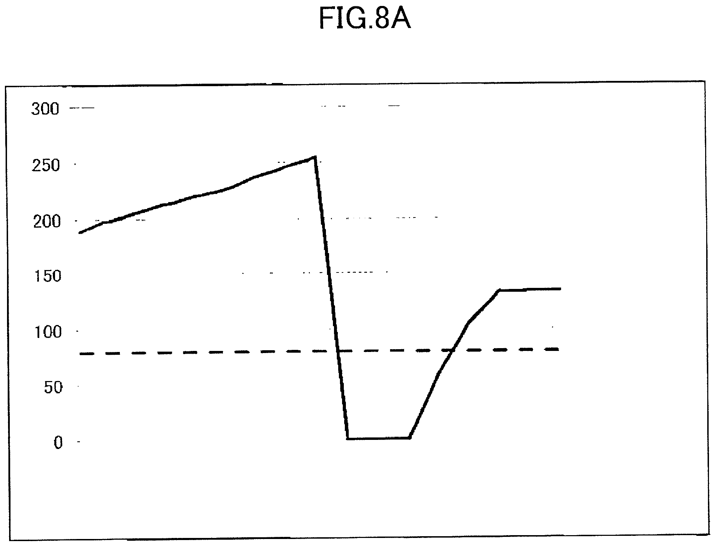

Fig. 8A to Fig. 8C illustrate an example of data of a line of action of a reaction force (coefficient of action of a reaction force) stored in the memory in the control unit 15. In each of the drawings, an axis of abscissas indicates a pushed down amount (pushed down position) of the operation body 33A, 33B or 43, and the pushed down amount increases toward a right direction in each of the drawings.

An axis of ordinates indicates locomotion given by the motors 35A, 35B and 45 to the movable members 32A, 32B and 42, respectively, and the locomotion becomes the reaction force given to each finger from the opposing operation body 33A or 33B, or the thumb operation body 43. As a positive number of the axis of ordinates becomes larger, a force to protrude the opposing operation body 33A or 33B, or the thumb operation body 43 from the case 21 becomes larger, and a reaction force felt by a finger becomes larger. A number of the axis of ordinates of a chart illustrated in each of Fig. 8A to Fig. 8C is a numerical value for controlling for setting a driving torque of the motor, and does not mean a physical unit of a force.

A solid line in a graph of each of Fig. 8A to Fig. 8C indicates variation of a force given to each of the movable members 32A, 32B and 42 when each of the operation bodies 33A, 33B and 43 is pushed down and moved toward the case. A dashed line in the graph indicates variation of a force given to each of the movable member 32A, 32B and 42 when each of the operation bodies 33A, 33B and 43 is moved back in a direction protruding from the case 21.

For example, in each of Fig. 11A to Fig. 11C, a chart of a solid line is a horizontal linear line. This means that a reaction force felt by a finger is constant regardless of the pushed down position at which each of the operation bodies 33A, 33B and 43 is pushed toward the case 21.

In each of Fig. 8A to Fig. 8C, there is an area where the solid line in the graph is increasing rightward substantially in accordance with a linear function. This means that, when pushing each of the operation bodies 33A, 33B and 43 toward the case 21, a reaction force felt by a finger increases in proportion to the pushed down amount, and inclination of the solid line at this time corresponds to an elastic coefficient of the virtual held object when being pushed.

### (Tactile sensation reaction force when operating virtual cut-off tool)

The tactile sensation reproduction apparatus 1A or 1B can make a hand of an operator feel a reaction force simulating situations of holding plural types of virtual held objects by a hand. Data of a line of action of a reaction force (coefficient of action of a reaction force) of each of plural types of virtual held objects is stored in the memory provided in the control unit 15. Image data stored in the control unit 15 is supplied to the display driver 14, images of the plural types of virtual held objects can be selectable to be displayed by the display device 13 illustrated in Fig. 1A or Fig. 1B, and an image of a hand is also displayed. These are displayed by computer graphics.

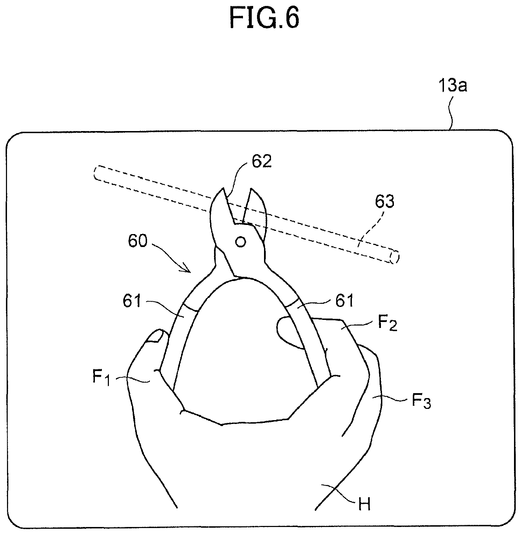

Fig. 6 illustrates a state in which a cut-off tool 60 is displayed as a virtual held object in a display screen 13a of the display device 13. The cut-off tool 60 is a nipper and includes a pair of handles 61 and 61 and a cutting portion 62 for cutting by an operation to the handles 61 and 61. A workpiece 63 that is cut by the cut-off tool 60 is illustrated in the display screen 13a. The workpiece 63 is an image of a metal wire.

An image of a hand "H" is displayed in the display screen 13a, and by a predetermined operation, the display is changed such that the image of the hand "H" presented in the display screen 13a moves, and an image of the handles 61 and 61 of the cut-off tool 60 is held by the image of the hand "H". For example, when moving the input device 20 while holding by a hand, the moved attitude is detected by the attitude sensing unit 53 and data regarding the attitude is provided to the control unit 15. With this data, the display driver 14 is controlled, and the image of the hand "H" displayed in the display screen 13a is moved to grip the handles 61 and 61. Alternatively, by selecting the cut-off tool 60 as the held object by another operation member such as a keyboard, the display is changed such that the hand "H" presented in the display screen 13a holds the image of the cut-off tool 60.

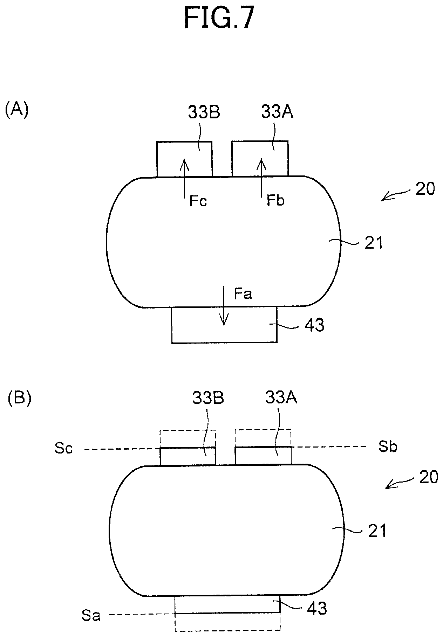

When the cut-off tool 60 is selected as the virtual held object, each of the motors 35A, 35B and 45 is controlled, and an initial position of the opposing operation body 33A or 33B, or the thumb operation body 43 is set. When the virtual held object is the cut-off tool 60, as illustrated in Fig. 7(A), each of the opposing operation bodies 33A and 33B, and the thumb operation body 43 is set at an initial position at which they are protruded from the case 21 at the maximum.

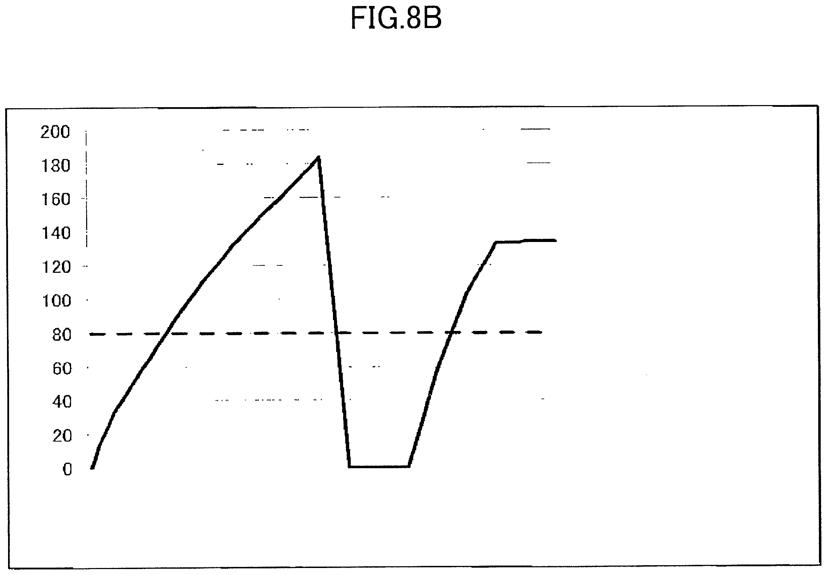

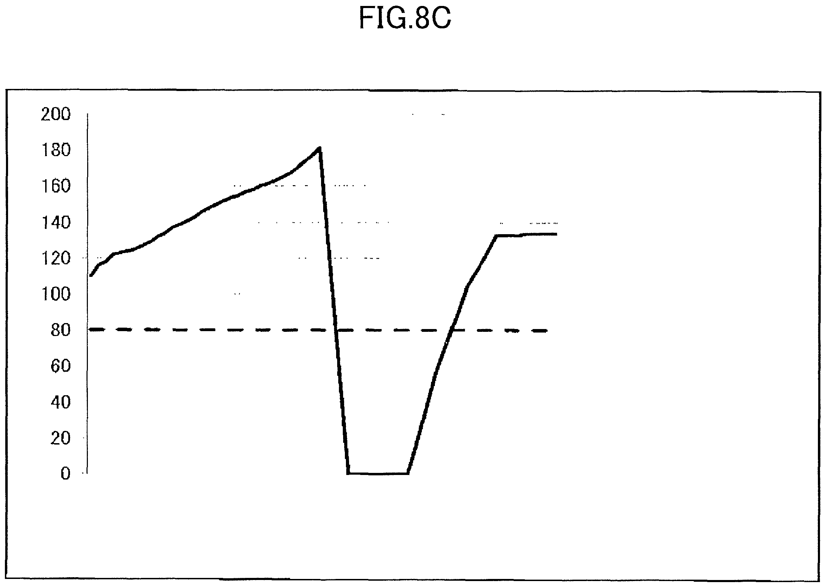

The control unit 15 reads out the data of a line of action of a reaction force (coefficient of action of a reaction force) illustrated in Fig. 8A to Fig. 8C from the memory. Then, the control unit 15 controls each of the motors 35A, 35B and 45 based on the data of the line of action of a reaction force. Fig. 8A illustrates a line of action of a reaction force given to the movable member 42 and the thumb operation body 43 from the motor 45 in the third tactile sensation generation unit 40, Fig. 8B illustrates a line of action of a reaction force given to the movable member 32A and the first opposing operation body 33A from the motor 35A in the first tactile sensation generation unit 30A, and Fig. 8C illustrates a line of action of a reaction force given to the movable member 32B and the second opposing operation body 33B from the motor 35B in the second tactile sensation generation unit 30B.

When an image in which the hand "H" holds the handles 61 and 61 of the cut-off tool 60 in the display screen 13a as illustrated in Fig. 6, and when pushing the thumb operation body 43, the first opposing operation body 33A and the second opposing operation body 33B of the input device 20 held by a right hand by a thumb, an index finger, and a middle finger, respectively, as illustrated in Fig. 1A, a display in the display screen 13a is changed such that the handles 61 and 61 gripped by a thumb F1, an index finger F2 and a middle finger F3 of an image of the hand "H" are moving closer to each other. Then, when the handles 61 and 61 approach to a certain extent, an image is changed such that the linear workpiece 63 is cut by the cutting portion 62.

During this series of operations, variation of a reaction force "Fa" (see Fig. 7(A)) given to the thumb operation body 43 is as illustrated by a solid line in Fig. 8A, and a reaction force "Fa" indicated by a numerical value approximately "190" is felt by the thumb at a beginning of pushing. By further pushing the thumb operation body 43, the reaction force "Fa" felt by the thumb is increased by substantially linear function. Then, when the handles 61 and 61 approach to a certain distance and the workpiece 63 is cut by the cutting portion 62 in the display screen 13a illustrated in Fig. 6, the reaction force "Fa" acting on the thumb operation body 43 rapidly decreases from the maximum value and a numerical value of the reaction force becomes "0". Thereafter, in order to reproduce a resistance force that acts on the thumb F1 that grasps the handles 61 and 61, the reaction force Fa acting on the thumb operation body 43 is recovered.

Variation of a reaction force "Fb" given to the first opposing operation body 33A is as illustrated by a solid line in Fig. 8B, and basic variation of the reaction force is the same as that in Fig. 8A. However, an initial reaction force "Fb" at a beginning of pushing the first opposing operation body 33A by an index finger is "0". Further, the reaction force "Fb" given to the first opposing operation body 33A is set to be smaller than the reaction force Fa given to the thumb operation body 43 from the beginning of pushing by the index finger until the reaction force becomes the maximum value right before the cutting operation.

Variation of a reaction force "Fc" given to the second opposing operation body 33B is as illustrated by a solid line in Fig. 8C. Basic variation of the reaction force is the same as that in Fig. 8A and Fig. 8B. A numerical value of an initial reaction force "Fc" at a beginning of pushing the second opposing operation body 33B by a middle finger is "approximately 110", that is larger than the initial value of the reaction force "Fb" to the index finger and smaller than the initial value of the reaction force "Fa" to the thumb. Further, the maximum value of the reaction force "Fc" right before the cutting operation is almost the same value as the maximum value of the reaction force "Fb" that acts on the index finger illustrated in Fig. 8B.

According to the above described control of the reaction force, when pushing the thumb operation body 43 by the thumb, pushing the first opposing operation body 33A by the index finger and pushing the second opposing operation body 33B by the middle finger, tactile sensation can be obtained in which the reaction force generated when gipping the handles 61 and 61 of the cut-off tool 60 illustrated in the display screen 13a of Fig. 6 becomes larger and the reaction force after cutting the workpiece 63 is drastically lowered.

Here, when performing the cutting operation of the workpiece by gripping actual handles of the cut-off tool 60 by an actual hand, one of the handles 61 is pushed only by the thumb and the other of the handles 61 is pushed by a plurality of fingers such as the index finger and the middle finger, and the reaction forces are given between the thumb and the other plurality of fingers. Thus, in an actual operation, the reaction force that is larger than that on the index finger or the middle finger acts on the thumb. Further, for the middle finger and the index finger pushing the same handle 61, as the middle finger strongly pushes the handle 61, a reaction force larger than that on the index finger tends to act on the middle finger.

Further, as a thumb is short while an index finger and a middle finger are long according to a structure of a hand of a human, even though it is recognized that each finger is operated by a same force, actually, a force acts on the held object from the thumb becomes larger than that on the held object from the index finger or the middle finger.

Thus, as illustrated in Fig. 8A to Fig. 8C, the reaction force "Fa" acting on the thumb operation body 43 is set to be larger than each of the reaction force "Fb" acting on the first opposing operation body 33A and the reaction force "Fc" acting on the second opposing operation body 33B from a beginning of pushing to reach the maximum value. This means that the reaction force given to the thumb from the thumb operation body 43 is set to be larger than the reaction force given from each of the two opposing operation bodies 33A and 33B to the index finger and the middle finger, respectively. By providing a difference in reaction forces as such, a feeling of a reaction force similar to a feeling actually grasping the handles 61 and 61 can be felt by a hand of a human.

Further, as illustrated in Fig. 8B and Fig. 8B, an initial value of the reaction force "Fc" acting on the second opposing operation body 33B is set to be larger than an initial value of the reaction force "Fb" acting on the first opposing operation body 33A. With this, an initial value of a reaction force given from the second opposing operation body 33B to the middle finger becomes slightly larger than an initial value of a reaction force given from the first opposing operation body 33A to the index finger. With this as well, an operation feeling as if actually operating the cut-off tool 60 can be felt by the thumb, the index finger and the middle finger that are operating the input device 20.

Further, operations of fingers to the operation bodies 33A, 33B and 43 and variation of the image of the hand "H" in the display screen 13a illustrated in Fig. 6 are engaging with each other, and by generating a cutting sound such as a snapping sound or a clicking sound from a sound production unit when cutting the workpiece 63 by the cutting portion 62, the operator can easily recognize a feeling as if actually operating the cut-off tool 60.

When the cutting operation by the cutting portion 62 is completed, and pushing forces given to the operation bodies 33A, 33B and 43 from fingers are removed, as illustrated by a dashed line in each of Fig. 8A, Fig. 8B and Fig. 8C, return locomotion is given from each of the motors 35A, 35B and 45 to each of the movable members 32A, 32B and 42, and each of the operation bodies 33A, 33B and 43 is returned to an initial position that is protruded from the case 21. As illustrated by the dashed line in each of Fig. 8A, Fig. 8B and Fig. 8C, return forces given from the motors 35A, 35B and 45 to the movable members 32A, 32B and 42, respectively, are controlled to be the same numerical value "80".

### (Tactile sensation reaction force when operating held object including pair of holding portions approaching each other)

The nipper illustrated in Fig. 6 is to grip the opposing handles 61 and 61 by a hand, and as a virtual held object that is operated by similarly gripping by a hand, a snip for cutting a metal, a scissors for cutting a paper, a scissors for cutting a plant and the like that are categorized into the same cut-off tool are exemplified. Further, as an object for giving an operation feeling of sandwiching a workpiece, pliers that are used to sandwich and bend a workpiece are exemplified. Further, as an object for operating by sandwiching by a thumb, an index finger and a middle finger, a stapler and the like is exemplified.

Each of these objects includes holding portions (handles or operating portions) such as the handles 61 and 61 illustrated in Fig. 6, that are symmetrically moved with respect to a common fulcrum as a center. For each of them, when one of the holding portions is pushed by a thumb, or the other of the holding portions is pushed by an index finger and a middle finger, the two holding portions are moved to approach each other. In other words, when one of the holding portions is pushed toward the other of the holding portions, inevitably, a distance between the holding portions becomes shorter.

Thus, in order to easily obtain an operation feeling stimulating such a held object, when either of the position detection devices 38A, 38B and 48 detects that either of the operation bodies 33A, 33B and 43 is pushed, it is possible to control to move the other of the operation bodies toward the case 21 for a same amount.

For example, as illustrated in Fig. 6, under a state in which the cut-off tool 60 is illustrated in the display screen 13a, a thumb touches the thumb operation body 43, an index finger touches the first opposing operation body 33A and a middle finger touches the second opposing operation body 33B, and the thumb operation body 43 is pushed down to a pushdown position "Sa" illustrated in Fig. 7(B) by the thumb earlier than by other fingers. When this is detected by the position detection device 48, the control unit 15 controls the motors 35A and 35B to automatically move the first opposing operation body 33A to a position "Sb" that is closer to the case 21, and the second opposing operation body 33B to a position "Sc" that is closer to the case 21. Protruding positions from the case 21 of the positions "Sa", "Sb" and "Sc" of the operation bodies are the same.

Similarly, when the first opposing operation body 33A is pushed down to the position "Sb" earlier, following this, the second opposing operation body 33B is retracted to the position "Sc" and the thumb operation body 43 is retracted to the position "Sa". Similarly, when the second opposing operation body 33B is pushed down to the position "Sc" earlier, following this, the first opposing operation body 33A is retracted to the position "Sa" and the thumb operation body 43 is retracted to the position "Sa".

This means that the control unit 15 monitors position detection outputs from the three position detection devices 38A, 38B and 48, and determines whether one of the operation bodies 33A, 33B and 43 is pushed earlier than the rest of the operation bodies for greater than or equal to a certain distance with respect to the other of the operation bodies. When it is determined that one of the operation bodies is pushed earlier for greater than or equal to a predetermined distance, following it, the rest of the operation bodies are retracted toward the case 21.

Here, at this time, the reaction force based on the line of action of a reaction force (coefficient of action of a reaction force) illustrated in Fig. 8A, Fig. 8B or Fig. 8C is given to the one, among the operation bodies 33A, 33B and 43, that is pushed earlier.

Next, after all of the operation bodies are retracted, when the pushing force by either of the fingers is released, a reaction force is generated based on the line of action of a reaction force (coefficient of action of a reaction force) illustrated in Fig. 8A, Fig. 8B or Fig. 8C, and the operation body from which the pushing force is released is returned in a direction protruding from the case 21 earlier. At this time, the rest of the operation bodies follow this, and are returned in the direction protruding from the case 21.

For example, when a predetermined period has passed after all of the operation bodies 33A, 33B and 43 are retracted in a direction approaching the case 21 by the motors, and thereafter, when one of the operation bodies is pushed, a reaction force is given to the operation body based on the line of action of a reaction force (coefficient of action of a reaction force) illustrated in Fig. 8A, Fig. 8B or Fig. 8C. Thus, thereafter, when a force of either of the fingers is weakened, the operation body at which that finger touches is returned. This returning motion is detected by the position detection device, the motors to drive the other operation bodies are started, and the other operation bodies are automatically moved in a direction departing from the case 21 by powers of the motors, and all of the operation bodies are returned to the initial position illustrated in Fig. 7(A).

For example, by describing with reference to a state in which the cut-off tool 60 is displayed as illustrated in Fig. 6 as an example, when the thumb operation body 43 is pushed by the thumb earlier, following this, the two opposing operation bodies 33A and 33B are retracted toward the case 21. In accordance with this, the handles 61 and 16, that are a pair of holding portions, approach each other in an image displayed in the display screen 13a illustrated in Fig. 6, and a cutting operation is performed. When a force pushing the thumb operation body 43 by the thumb is released, the thumb operation body 43 is returned to a direction departing from the case 21, and in accordance with, the two opposing operation bodies 33A and 33B are returned in a direction departing from the case 21. Then, in the display screen 13a illustrated in Fig. 6, the cutting operation is completed, and images of the handles 61 and 61 are moved in a direction departing from each other.

Next, when the opposing operation body 33A or 33B is pushed by the index finger or the middle finger earlier, following this, the late side opposing operation body and the thumb operation body 43 are retracted toward the case 21, and the images of the handles 61 and 61 approach each other in the display screen 13a illustrated in Fig. 6, and the cutting operation is performed.

However, at this time, even when one of the index finger and the middle finger is released from the respective opposing operation body 33A or 33B, while the opposing operation body is pushed by the other, all of the operation bodies do not protrude in a direction departing from the case 21. When the position detection devices 38A and 38B detect that both of the index finger and the middle finger are moving away from the opposing operation bodies 33A and 33B, and the opposing operation bodies 33A and 33B are moved in a protruding direction, the first opposing operation body 33A and the second opposing operation body 33B are moved in a direction departing from the case 21 by the motors 35A and 35B, and in conjunction with this, the thumb operation body 43 is returned in a direction departing from the case 21 by the motor 45.

By controlling as described above, an operation feeling similar to holding and operating a tool in which two holding portions are operated to rotate with a common fulcrum such as the nipper illustrated in Fig. 6 by a hand can be obtained. Further, this simulation operation can be used for simulations and the like of any machines, devices and tools as long as the virtual held object includes moving potions that are symmetrically moved.
- 1A, 1B: tactile sensation reproduction apparatus
- 10A, 10B: device body
- 11: mask-shaped main body
- 13: display device
- 15: control unit
- 20: input device
- 21: case
- 28: mechanism chassis
- 30A: first tactile sensation generation unit
- 30B: second tactile sensation generation unit
- 32A, 32B: movable member
- 33A: first opposing operation body
- 33B: second opposing operation body
- 35A, 35B: motor
- 38A, 38B: position detection device
- 40: third tactile sensation generation unit
- 42: movable member
- 43: thumb operation body
- 45: motor
- 48: position detection device

## Claims

1. A tactile sensation reproduction apparatus, comprising:
an input device; and
a control unit,
wherein the input device includes
a plurality of operation bodies that protrude in an opposite direction from the case,
a position detection device that detects a protruded position of each of the operation bodies from the case, and
a motor that provides a force to each of the operation bodies,
wherein when it is detected that the operation body is moved by being pushed toward the case based on the detection signal from the position detection device, the control unit drives the motor to give a reaction force to the moved operation body, and
wherein when it is detected that one of the operation bodies is moved toward the case earlier based on the detection signal from the position detection device, the control unit drives the motor such that the other of the operation bodies is also moved toward the case.

2. The tactile sensation reproduction apparatus according to claim 1, wherein when it is determined that one of the operation bodies is moved toward the case earlier for greater than or equal to a predetermined distance with respect to that of the other of the operation bodies, the other of the operation bodies is controlled to follow the preceding operation body to be moved toward the case.

3. The tactile sensation reproduction apparatus according to claim 1 or 2, wherein when one of the operation bodies that is moved toward the case is moved in a direction protruding from the case, in accordance with this, the other of the operation bodies is returned to a position protruding from the case by power of the motor.

4. The tactile sensation reproduction apparatus according to any one of claims 1 to 3,
wherein a thumb operation body that is pushed and operated by a thumb, and a first opposing operation body and a second opposing operation body that are individually pushed and operated by an index finger and a middle finger, are provided in the input device, and
wherein the first opposing operation body and the second opposing operation body protrude in a direction opposite to a protruding direction of the thumb operation body.

5. The tactile sensation reproduction apparatus according to any one of claims 1 to 4, further comprising:
a display device,
wherein the control unit displays an image of a virtual held object and an image of a hand in a display screen of the display device, and
wherein when the operation bodies of the input device are held by a finger, an image in which the image of the hand holds the image of the held object is displayed.

6. The tactile sensation reproduction apparatus according to claim 5,
wherein the virtual held object includes a pair of holding portions including a common fulcrum to rotate,
wherein an image in which one of the holding portions is held by a thumb and the other of the holding portions is held by an index finger and a middle finger is displayed, and
wherein when the thumb operation body is pushed by the thumb or the first opposing operation body or the second opposing operation body is pushed by the index finger or the middle finger, the image is changed such that the pair of holding portions are approaching each other in the displayed image.

7. The tactile sensation reproduction apparatus according to claim 6, wherein the held object is a cut-off tool that is operated by being sandwiched by a thumb, an index finger and a middle finger.

8. The tactile sensation reproduction apparatus according to claim 6, wherein the held object is cutting pliers that are operated by being sandwiched by a thumb, an index finger and a middle finger.

9. The tactile sensation reproduction apparatus according to claim 6, wherein the held object is a stapler that is operated by being sandwiched by a thumb, an index finger and a middle finger.
